# EUROPEAN PATENT APPLICATION

(11) **EP 4 492 491 A1**
(43) Date of publication of application: **15.01.2025**
(21) Application number: 22950586.2
(22) Date of filing: 13.07.2022
(51) Int. Cl.: H01M 4/139, B05C 1/06

(54) **PRESSING AND COATING APPARATUS, ELECTRODE SHEET COATER, AND BATTERY PRODUCTION SYSTEM**

(71) Applicant: Contemporary Amperex Technology Co., Limited, Ningde, Fujian 352100 (CN)
(72) Inventor: LU, Lei, Ningde, Fujian 352100 (CN); HU, Changyuan, Ningde, Fujian 352100 (CN); WANG, Zheng, Ningde, Fujian 352100 (CN); LI, Shisong, Ningde, Fujian 352100 (CN); ZHANG, Shengwu, Ningde, Fujian 352100 (CN)
(74) Representative: Gong, Jinping
(86) International application number: PCT/CN2022/105530
(87) International publication number: WO 2024/011460

(57) **Abstract**

Disclosed is an extrusion coating apparatus, including: a housing **(10)** having an inner chamber, a housing wall of the housing **(10)** having a feed port **(11)** and a coating outlet **(12)** both communicated with the inner chamber, the coating outlet **(12)** being in a slit shape; and further including a porous structure **(20)** disposed in the inner chamber and located on a material flow path between the feed port **(11)** and the coating outlet **(12),** so that at least a portion of a material passes through the porous structure **(20).** Further disclosed are an electrode plate coating machine including the extrusion coating apparatus and a battery production system including the electrode plate coating machine.

## Description

### Technical Field

The present disclosure relates to an extrusion coating apparatus, an electrode plate coating machine and a battery production system.

### Background

Secondary batteries, especially lithium-ion batteries, have the advantages of high voltage, large specific energy, long cycle life, zero pollution, wide operating temperature range, small self-discharge etc., are widely used in portable electronic devices as well as power devices of large new energy electric vehicles, and are of great significance to solving human environmental pollution and energy crisis. There is still a need for further improvements in terms of the preparation of battery electrode plates.

### Summary of the Invention

In one aspect of the present disclosure, an extrusion coating apparatus is provided, including:
a housing having an inner chamber, a housing wall of the housing having a feed port and a coating outlet both communicated with the inner chamber, the coating outlet being in a slit shape; and
a porous structure disposed in the inner chamber and located on a material flow path between the feed port and the coating outlet, so that at least a portion of a material passes through the porous structure.

In this embodiment, with the porous structure disposed in the inner chamber of the housing, and the porous structure located on the material flow path between the feed port and the coating outlet so that at least a portion of the material entering from the feed port passes through the porous structure under blocking action of the porous structure, adjustment of a speed of the material discharged from the coating outlet is attained, thereby meeting the relevant needs for material coating.

In some embodiments, the porous structure has at least three through holes, the at least three through holes include at least two groups of through holes, and the at least two groups of through holes are differed in at least one of through hole cross-sectional size and porosity.

In this embodiment, the at least three through holes of the porous structure are grouped to enable the at least two groups of through holes included in the at least three through holes to be differed in at least one of the through hole cross-sectional size and the porosity, so that flow rate adjustment is attained using diversity in the through hole cross-sectional size and/or porosity in dependence on ranges of materials on which different groups of through holes act, and in this way, the relevant needs for material coating may be more fully met.

In some embodiments, the at least two groups of through holes are arranged along a length direction of the coating outlet.

In this embodiment, by arranging groups of through holes diverse in through hole cross-sectional size and/or porosity along the length direction of the coating outlet, it is possible to attain adjustment of the material flow rate at different areas in the length direction of the coating outlet and meet the specific needs for material coating, such as allowing a material to be discharged outward from the coating outlet evenly in the length direction of the coating outlet.

In some embodiments, the at least two groups of through holes include a first group of through holes and a plurality of second groups of through holes, where a region of the porous structure corresponding to the first group of through holes intersects a first plane, the plurality of second groups of through holes are located on one or both sides of the first group of through holes, the first group of through holes and the second groups of through holes are differed in at least one of through hole cross-sectional size and porosity, and the first plane is a reference plane passing through a midpoint of the feed port and perpendicular to the length direction of the coating outlet.

Given that in the length direction of the coating outlet, the flow rate of a material facing the feed port is usually higher than that of a material not facing the feed port, therefore, by, depending on the first plane determined by a position of the feed port, allowing the at least two groups of through holes to include a first group of through holes in the corresponding region intersecting the first plane and a plurality of second groups of through holes located on one side or both sides of the first group of through holes, and with the first group of through holes and the second groups of through holes differed in at least one of through hole cross-sectional size and porosity, effective adjustment of the material flow rate in the length direction of the coating outlet is attained and the relevant needs for material coating are met.

In some embodiments, the porosity of the first group of through holes is less than that of the second groups of through holes.

In this embodiment, by allowing the porosity of the first group of through holes to be less than that of the second groups of through holes, it is possible to reduce unit flow quantity of a material passing through the first group of through holes and to increase unit flow quantity of the material passing through the second group of through holes, and thus, diversity in the flow rate of the material in the length direction of the coating outlet is reduced with control of the unit flow quantity of the material flowing through different groups of through holes, such that the material is discharged outward more evenly in the length direction of the coating outlet.

In some embodiments, the porosity of the second groups of through holes located on one side of the first group of through holes gradually increases in a direction away from the first plane.

The flow rate of the material usually gradually decreases in a direction parallel to the length direction of the coating outlet and away from the first plane. By allowing the porosity of the plurality of second groups of through holes located on one side of the first group of through holes to gradually increases in this direction, the decrease in material flow rate is, therefore, compensated for using the increase in the porosity, and the flow rate diversity of the material in the length direction of the coating outlet is reduced, such that the material is discharged outward more evenly in the length direction of the coating outlet.

In some embodiments, the through hole cross-sectional size of the first group of through holes is less than that of the second groups of through holes.

In this embodiment, by allowing the through hole cross-sectional size of the first group of through holes to be less than that of the second groups of through holes, it is possible to reduce the unit flow quantity of a material passing through the first group of through holes and to increase the unit flow quantity of the material passing through the second group of through holes, and thus, diversity in the flow rate of the material in the length direction of the coating outlet is reduced with control of the unit flow quantity of the material flowing through different groups of through holes, such that the material is discharged more evenly in the length direction of the coating outlet.

In some embodiments, the through hole cross-sectional sizes of the second groups of through holes located on one side of the first group of through holes gradually increase in a direction away from the first plane.

The flow rate of the material usually gradually decreases in a direction parallel to the length direction of the coating outlet and away from the first plane. By allowing the through hole cross-sectional size of the plurality of second groups of through holes located on one side of the first group of through holes to gradually increase in this direction, the decrease in material flow rate is, therefore, compensated for using the increase in the porosity, and the flow rate diversity of the material in the length direction of the coating outlet is reduced, such that the material is discharged outward more evenly in the length direction of the coating outlet.

In some embodiments, the number of the plurality of second groups of through holes is an even number, and the plurality of second groups of through holes are symmetrical with respect to the first plane.

In order to enable material flow rate on both sides of the first plane to be more even, the material may be discharged outward at a more even flow rate in the length direction of the coating outlet by enabling an even number of second groups of through holes to be symmetrical with respect to the first plane.

In some embodiments, the inner chamber includes: a feeding chamber, a discharging chamber, and an intermediate chamber, where the feeding chamber is communicated with the feed port, the discharging chamber is communicated with the coating outlet, the intermediate chamber is located between the feeding chamber and the discharging chamber, and connects the feeding chamber and the discharging chamber; and the porous structure is located in at least one of the feeding chamber, the discharging chamber, and the intermediate chamber.

In this embodiment, the inner chamber is divided into multiple chambers including the feeding chamber, the discharging chamber, and the intermediate chamber, and in this way, by disposing the porous structure in at least one of the feeding chamber, the discharging chamber, and the intermediate chamber, it is possible to perform configuring according to roles of the porous structure in the different chambers so as to achieve the relevant processing requirements when a material passes through the extrusion coating apparatus.

In some embodiments, cross-sectional area of the feeding chamber gradually increases in a material flowing direction; and/or cross-sectional area of the discharging chamber gradually decreases in the material flowing direction.

In this embodiment, the cross-sectional area ofthe feeding chamber is allowed to gradually increase in the material flowing direction, and in this way, the feeding chamber may be communicated with the feed port through the small cross-sectional area to facilitate butt connection between the feed port and a feed pipe, and material capacity that may be accommodated inside the extrusion coating apparatus is increased through the gradually increased cross-sectional area; gradually reducing the cross-sectional area ofthe discharging chamber helps to build up material pressure within the discharging chamber so that the material can flow more smoothly to the coating outlet.

In some embodiments, the porous structure includes at least one first porous plate, and the at least one first porous plate is disposed in the discharging chamber and arranged at intervals along a material moving direction.

By disposing the first porous plate in the discharging chamber, adjusting action for material flow rate may be achieved via through hole arrangement on the first porous plate when a material flows through the discharging chamber to the coating outlet, such that the flow rate of the material at various positions of the coating outlet can be adjusted before being discharged from the coating outlet, thus meeting the relevant needs for material coating.

In some embodiments, the porous structure further includes at least one second porous plate, and the at least one second porous plate is disposed in the intermediate chamber and arranged at intervals along a material moving direction.

With the second porous plate disposed in the intermediate chamber, the second porous plate may be utilized to build up pressure on a material flowing through the intermediate chamber, so that the material can flow to the coating outlet more smoothly, and with through holes in the second porous plate, it is possible to achieve pre-homogenization of the material before entering the discharging chamber and increase homogenization level of the material in the discharging chamber, thereby assisting the first porous plate in the discharging chamber in flow rate adjustment for the material.

In some embodiments, the extrusion coating apparatus further includes:
a covering member whose position relative to the porous structure is adjustable; and
an adjustment mechanism connected to the covering member and configured to adjust a covering range of the covering member for the at least three through holes.

In order to improve an ability of the porous structure to adjust material flow rate, the covering member with the adjustable position is employed to adjust the covering range for the at least three through holes in the porous structure. Material flow quantity variation at different positions is achieved through different covering ranges. Therefore, more flexible material flow rate adjustment is achieved, further meeting the related needs for material coating.

In some embodiments, the covering member is slidable on a surface of the porous structure away from the coating outlet.

With the covering member disposed on a side of the porous structure away from the coating outlet and allowed to be slidable on the surface of this side, on the one hand, through holes in the porous structure may be better covered, and on the other hand, supporting action may be created for the covering member through the porous structure, improving smoothness during position adjustment of the covering member and improving stability of the covering action attained by the covering member.

In some embodiments, the adjustment mechanism includes:
an adjustment channel penetrating from an outer wall of the housing to the inner chamber; and
a locking portion disposed outside the housing and connected to the covering member,
where the covering member is inserted into the adjustment channel and is slidable within the adjustment channel along the length direction of the coating outlet, and the locking portion is configured to lock the covering member at a set position within the adjustment channel.

In order to facilitate use of the covering member, the through adjustment channel is provided on the outer wall of the housing so that the covering member is inserted into the adjustment channel and slides in the adjustment channel to achieve the use and position adjustment of the covering member. Through locking action of the locking portion for the covering member, it is possible to allow covering action of the covering member for some of through holes in the porous structure to be more stable and reliable.

In some embodiments, the locking portion includes:
a pressing block slidably disposed on a surface of the outer wall of the housing and configured to lock a position of the covering member relative to the housing by pressing the covering member;
a fixed block disposed on the outer wall of the housing; and
an adjusting bolt in threaded connection with the fixed block and abutting against the pressing block.

By disposing the pressing block that may press the covering member on the surface of the outer wall of the housing in cooperation with the fixed block and the adjustment bolt abutting against the pressing block, locking and unlocking of the covering member may be achieved, thereby making it more convenient to achieve position adjustment and fixing for the covering member.

In some embodiments, diameter **d1** of through holes in the first group of through hole is **1-15 mm.**

Given that if the diameter of the through holes in the first group of through holes is too large, adjustment effect on material speed is limited, and that if the diameter of the through holes is too small, discharging continuity of a material is then affected, both material speed adjusting action and discharging continuity for the first group of through holes may, therefore, be taken into account as much as possible by allowing the diameter **d1** of the through holes in the first group of through holes to be **1-15 mm.**

In some embodiments, the diameter **d1** is **2-10 mm.**

By allowing the diameter **d1** of the through holes in the first group of through holes to be **2-10 mm,** both the material speed adjusting action function and discharging continuity for the first group of through holes may be more effectively taken into account.

In some embodiments, ratio **d2/d1** of diameter **d2** of the through holes in the plurality of second groups of through holes to the diameter d1 of the through holes in the first group of through holes is **1.1-10.**

In the second groups of through holes and the first group of through holes, too low flow rate of a material passing through the first group of through holes can be caused if the ratio of the through hole diameter of the first group of through holes to that of the second groups of through holes is too large, and it is difficult to effectively achieve even flow rate of the material in the length direction of the coating outlet if this ratio is too small. Therefore, by allowing the ratio **d2/d1** of the diameter **d2** of the through holes in the plurality of second groups of through holes to the diameter **d1** of the through holes in the first group of through holes to be **1.1-10,** it is possible to take into account as much as possible both the even flow rate of the material in the length direction of the coating outlet and the flow rate of the material passing through the first group of through holes.

In some embodiments, the ratio **d2/d1** is 1.5-6.

By allowing the ratio **d2/d1** of the diameter **d2** of the through holes in the plurality of second groups of through holes to the diameter **d1** of the through holes in the first group of through holes to be **1.5-6,** it is possible to more effectively take into account both the even flow rate of the material in the length direction of the coating outlet and the flow rate of the material passing through the first group of through holes.

In some embodiments, ratio **s1/s2** of sum **s1** of cross-sectional areas of the at least three through holes to overall area **s2** of the porous structure is **20%-60%.**

For the porous structure, if the cross-sectional area of the at least three through holes takes up a too small part of the overall area of the porous structure, material extrusion resistance is then large, reducing overall extrusion speed of the material, and making it difficult to meet requirements of subsequent production processes; further, pressure withstood by the inner chamber of the housing will also increase sharply due to the large resistance, thus easily resulting in damage. If the cross-sectional area of theat least three through holes takes up a too large part of the overall area of the porous structure, there is not enough pressure built in the inner chamber of the housing for the material, resulting in uneven pressure for the material in the inner chamber, more easily causing uneven extrusion speed to the coating outlet, and affecting interface fusion for the material. Therefore, by allowing the ratio **s1/s2** of the sum **s1** of the cross-sectional areas of the at least three through holes to the overall area **s2** of the porous structure to be **20%-60%,** it is possible to take into account as much as possible both reduction in material extrusion resistance and a need of the material for building pressure in the inner chamber of the housing.

In some embodiments, the ratio **s1/s2** is **30%-55%.**

By allowing the ratio **s1/s2** of the sum **s1** of cross-sectional areas of the at least three through holes to the overall area **s2** of the porous structure to be **30%-55%,** it is possible to take into account more effectively both reduction in the material extrusion resistance and the need of the material for building pressure in the inner chamber of the housing.

In some embodiments, the coating outlet is symmetrically disposed with respect to a second plane, and the second plane passes through a middle position of the coating outlet in a width direction and intersects the feed port.

By allowing the second plane passing through the middle position of the coating outlet in the width direction to intersect the feed port, and allowing the coating outlet to be symmetrically disposed with respect to the second plane, it is possible to enable material flow rate for the coating outlet in the width direction of the coating outlet to be more even.

In some embodiments, the housing includes:
a first sub-housing having a first groove, a first mounting portion for mounting the porous structure being provided within the first groove; and
a second sub-housing having a second groove, a second mounting portion for mounting the porous structure being provided within the second groove,
where the housing is configured such that after the first sub-housing and the second sub-housing are fitted together, the first groove and the second groove enclose the inner chamber.

The housing is formed in a structural form of the sub-housings, the inner chamber of the housing is enclosed by the grooves within the sub-housings, and the porous structure is mounted and fixed through the mounting portions within the grooves, thereby effectively reducing difficulty in manufacturing the housing and facilitating mounting, replacement and detachment of the porous structure in the inner chamber.

In some embodiments, at least one of the feed port and the coating outlet is enclosed by the first sub-housing and the second sub-housing fitted together.

With edge portions of the sub-housings to enclose the feed port and the coating outlet, formation of the feed port and the coating outlet is enabled to be simpler, thereby further reducing the difficulty in manufacturing the housing.

In some embodiments, the material includes an electrode slurry used for positive electrode coating and having a solid content of **75%-85%.**

For the electrode slurry used for positive electrode coating and having the solid content of **75%-85%,** when the electrode slurry is subjected to coating on a surface of an electrode plate through the extrusion coating apparatus, since this electrode slurry contains a very low amount of solvent and presents no fluidity on a macro scale, viscosity is very high and it is difficult to achieve self-homogenizing distribution in the length direction of the coating outlet. Therefore, there is a problem of uneven extrusion speed when there is no porous structure in the inner chamber of the housing. And, with the porous structure disposed in the inner chamber, at least a portion of the electrode slurry is enabled to pass through the porous structure, thereby increasing evenness level of the extrusion speed of the electrode slurry with the porous structure, meeting the coating requirements of the electrode slurry of a positive electrode plate, and improving quality of the positive electrode plate formed.

In some embodiments, the material includes an electrode slurry used for negative electrode coating and having a solid content of **68%-74%.**

For the electrode slurry used for negative electrode coating and having the solid content of **68%-74%,** when the electrode slurry is subjected to coating on a surface of an electrode plate through the extrusion coating apparatus, since this electrode slurry contains a very low amount of solvent and presents no fluidity on a macro scale, viscosity is very high and it is difficult to achieve self-homogenizing distribution in the length direction of the coating outlet. Therefore, there is a problem of uneven extrusion speed when there is no porous structure in the inner chamber of the housing. And, with the porous structure disposed in the inner chamber, at least a portion of the electrode slurry is enabled to pass through the porous structure, thereby increasing evenness level of the extrusion speed of the electrode slurry with the porous structure, meeting the coating requirements of the electrode slurry of a negative electrode plate, and improving quality of the negative electrode plate formed.

In one aspect of the present disclosure, an electrode plate coating machine is provided, including: a foregoing extrusion coating apparatus.

The electrode plate coating machine employing a foregoing extrusion coating apparatus can improve an electrode plate coating process, improving electrode plate quality.

In one aspect of the present disclosure, a battery production system is provided, including: a foregoing electrode plate coating machine.

The battery production system employing the foregoing electrode plate coating machine can improve a battery production process, improving battery quality.

### Description of Drawings

To illustrate the technical solutions in the embodiments of the present disclosure more clearly, the following briefly introduces the accompanying drawings required for use in the embodiments of the present disclosure. Apparently, the accompanying drawings described below show merely some embodiments of the present disclosure, and a person of ordinary skill in the art may derive other drawings from accompanying drawings without creative efforts.

The present disclosure may be more clearly understood from the following detailed description with reference to the accompanying drawings, in which:
FIG. **1** isa mounting structural schematic of some embodiments of an extrusion coating apparatus according to the present disclosure when partially cut open;
FIG. **2** is a schematic diagram of multiple chambers divided from an inner chamber in FIG. **1****;**
FIG. **3** is a structural schematic of a porous structure in some embodiments of an extrusion coating apparatus according to the present disclosure;
FIG. **4** is a mounting structural schematic of further embodiments of an extrusion coating apparatus according to the present disclosure when partially cut open;
FIG. **5** is a front view of FIG. **4** in a material moving direction;
FIG. **6** is a structural schematic diagram of an AA section in FIG. **5****;**
FIG. **7** is a structural schematic diagram of an BB section in FIG. **5****;**
(a) and (b) of FIG. 8 are respectively structural schematic diagrams of two sub-housings in FIG. 7 that make up the housing;
FIG. **9** is an actual state diagram when an electrode slurry is extruded from a coating outlet of an extrusion die head in related art;
FIG. **10** is an actual state diagram when an electrode slurry is extruded from a coating outlet of an embodiment of an extrusion coating apparatus of the present disclosure.

It should be appreciated that dimensions of various parts shown in the drawings are not drawn per an actual proportional relationship. In addition, the same or similar reference numerals represent the same or similar members.

Description of Reference Numerals:
**10:** housing; 10a: first sub-housing; **10b:** second sub-housing; **11:** feed port; **12:** coating outlet; **131:** feeding chamber; **132:** discharging chamber; **133:** intermediate chamber; **13a:** first groove; **13b:** second groove; **14a:** first mounting portion; **14b:** second mounting portion;
**20:** porous structure; **21:** through hole; **211:** first group of through holes; **212a, 212b, 212c,** and **212d:** second groups of through holes; **22:** first porous plate; **23:** second porous plate;
**30:** covering member;
**40:** adjustment mechanism; **41:** adjustment channel; **42:** locking portion; **421:** pressing block; **422:** fixed block; **423:** adjustment bolt;
**51:** first diaphragm; **52:** second diaphragm.

### Detailed Description

The following further describes in detail the implementations of the present disclosure with reference to the accompanying drawings and embodiments. The following detailed description of the embodiments and the drawings are used to illustrate the principles of the present disclosure by way of example, but should not be used to limit the scope of the present disclosure, that is, the present disclosure is not limited to the described embodiments.

In the description of the present disclosure, it should be noted that, unless otherwise stated, "plurality of" means two or more; the orientation or positional relationships indicated by the terms "upper", "lower", "left", "right", "inner" and "outer" are only for facilitating the description of the present disclosure and simplifying the description, rather than indicating or implying that the apparatus or element referred to must have a particular orientation or be constructed and operated in a particular orientation, and therefore will not be interpreted as limiting the present disclosure. In addition, the terms "first", "second", third" etc. are used for descriptive purposes only, and cannot be construed as indicating or implying relative importance. "Perpendicular" is not strictly perpendicular, but within the margin of errors allowed. "Parallel" is not strictly parallel, but within the margin of errors allowed.

All the directional words appearing in the following description are the directions shown in the figures and do not limit the specific structures of the present disclosure. In the description of the present disclosure, it is to be noted that unless otherwise expressly specified and limited, the terms "mount," "connected", and "connect" should be broadly understood, for example, they may be a fixed connection or a detachable connection or an integral connection; or may be a direct connection, or an indirect connection through an intermediate medium. For those of ordinary skill in the art, the specific meanings of the above terms in the present disclosure may be understood according to specific circumstances.

The following describes in detail some embodiments of the present invention with reference to the accompanying drawings. In absence of conflicts, features in the following embodiments may be combined to one another.

With the development of lithium battery technology, the demand for lithium batteries continues to grow, and preparation of electrode plates therein is an important technical process in lithium battery manufacturing. In related art, slurry extrusion wet coating technology or solvent-free dry coating technology is adopted for positive and negative electrode plates in the manufacturing process of lithium batteries.

Wet coating technology generally adopts N-methylpyrrolidone (NMP) as a solvent for a positive electrode slurry or a water solvent as a solvent for a negative electrode slurry, a binder, an active substance, and an electrically conductive agent are made into a slurry via high-speed dispersion, the slurry is then applied to coat a surface of a current collector (such as an aluminum foil, and a copper foil) by a wet method, and then the solvent is oven-dried via a high-temperature oven to give a required electrode plate.

The wet coating technology has disadvantages such as high solvent usage, high energy consumption for oven-drying, and environmental unfriendliness due to a solvent being toxic. Additionally, there is also a problem in the oven-drying process of the electrode plate prepared by the wet coating technology that the binder and the electrically conductive agent float up, resulting in their uneven distribution in the electrode plate, which seriously restricts battery performance. There are also bottlenecks in the preparation of a thick electrode plate. Especially under high-speed coating and thin current collector conditions, a diaphragm is prone to cracking and other problems.

Dry coating technology first uses dry mixing equipment to fully premix an active substance, an electrically conductive agent, and a binder, then fibrillates the binder via air flow fibrillation equipment, and then prepare positive and negative electrode plates of a battery by subjecting the fibrillated powder to heat rolling, calendering, and heat compounding.

The dry coating technology has the disadvantage that difficulty in controlling lateral consistency and difficulty in particle sliding during rolling cause difficulty in compacting an electrode plate. Additionally, the dry coating technology is in absence of solvents, so during the rolling process of an electrode plate, sliding friction between particles is very large, and fibrillated polytetrafluoroethylene **(PTFE)** binder is easily sheared, thereby reducing utilization efficiency of the **PTFE** binder. When a current collector is coated with a diaphragm, it is also necessary to pre-coat a surface of the current collector with a coating having a binding function, which may be hot sol, electrically conductive glue, etc. This increases manufacturing cost, and the coating may have a negative impact on battery long-term performance.

In order to overcome at least some of the problems present in the wet coating technology and the dry coating technology, when the extrusion coating apparatus of an embodiment of the present disclosure is applied to an electrode plate diaphragm coating process, materials subject to extrusion coating may include, but not limited to, an electrode slurry prepared by a quasi-dry method. This material prepared by the quasi-dry method contains a very small amount of solvent, presents no fluidity macroscopically and is like a "dough-shaped" material.

Compared with materials prepared by the wet coating technology, the material prepared by the quasi-dry method uses much less solvent than the wet coating technology, so oven-drying energy consumption can be reduced and environmental pollution can be decreased; and since the solvent content is small and it is difficult for the binder and the electrically conductive agent in the diaphragm to float up, the binder and the electrically conductive agent in the prepared electrode plate are more evenly distributed, thereby further improving electrochemical performance of the electrode plate. Moreover, since the solvent content of the material prepared by the quasi-dry method is low, drying stress present in the drying process of a thick electrode plate is extremely small in preparing the electrode plate, such that the diaphragm is less prone to cracking.

Compared with the material prepared by the dry coating technology, the material prepared by the quasi-dry method is added a small amount of solvent, so an extruded diaphragm may greatly promote particle sliding during rolling thinning, excessive rolling rarely occurs, processing performance is better, and an electrode plate is allowed to be more easily compacted, thus allowing for higher energy density batteries. Regarding the use of a binder, the amount of the binder used in the material prepared by the quasi-dry method is much less than that in the dry coating technology, which can thus reduce the cost and further increase battery energy density. In the compounding process of a diaphragm and a current collector, there is no need for any surface pretreatment of the current collector, thereby reducing manufacturing cost and eliminating the negative impact that a coating disposed on a surface of the current collector may have on battery long-term performance.

Therefore, the material prepared by the quasi-dry method may significantly improve production efficiency and reduce production energy consumption and cost. However, for the above-mentioned material prepared by the quasi-dry method, it is difficult to achieve self-homogenizing distribution in an inner chamber of an extrusion coating apparatus in the related art after being incorporated into the extrusion coating apparatus due to the material's high viscosity and zero fluidity, resulting in uneven flow rate of the material in a length direction of a coating outlet, and thus enabling the diaphragm formed to be unable to meet the relevant needs for material coating.

In view of this, the present disclosure provides an extrusion coating apparatus, an electrode plate coating machine, and a battery production system, which can achieve flow rate adjustment of a material for coating to meet the relevant needs for material coating.

The extrusion coating apparatus may be used for coating of a material on a specific surface to form a film layer covering the specific surface. For example, the extrusion coating apparatus may be used for coating of an electrode slurry for a positive electrode plate or a negative electrode plate, and the embodiments of the present disclosure are not limited in this regard. An electrode plate obtained by coating may be used to form an electrode assembly in a battery cell.

In some embodiments, the material may include an electrode slurry used for positive electrode coating and having a solid content of **75%-85%,** and may also include an electrode slurry used for negative electrode coating and having a solid content of **68%-74%.** The material may be prepared by a quasi-dry method, and a preparation process thereof may include: mixing an active material, an electrically conductive agent, and an additive to prepare a dry powder mixture, and preparing a binder into a colloidal liquid; mixing the dry powder mixture and the colloidal liquid, and preparing, through a kneading process, a bulk material with a certain solid content, i.e., a material obtained by preparing. In further embodiments, the above material may also be obtained adopting other preparation manners.

The battery cell may include a lithium-ion secondary battery, a lithium-ion primary battery, a lithium- sulfur battery, a sodium-lithium-ion battery, a sodium-ion battery, a magnesium-ion battery, or the like, and the embodiments of the present disclosure are not limited in this regard. The battery cell may be cylindrical, flat, rectangular, or in other shapes, and the embodiments of the present disclosure are not limited in this regard.

The electrode assembly may include a positive electrode plate, a negative electrode plate, and a separator located between the positive electrode plate and the negative electrode plate. The battery cell operates mainly relying on movement of internal metal ions between the positive electrode plate and the negative electrode plate.

The positive electrode plate includes a positive electrode current collector and a positive electrode active substance layer. A positive tab is connected to or formed on the positive electrode current collector. Taking a lithium-ion battery as an example, a material for the positive electrode current collector may be aluminum, and the positive active material may include at least one of the following materials: lithium-containing phosphate with olivine structure, lithium transition metal oxide, and respective modified compounds thereof. However, the present disclosure is not limited to these materials, and other conventional materials useful as positive electrode active materials for batteries may also be used.

One type of these positive electrode active materials may be used alone, or two or more types may be used in combination. Herein, examples of lithium transition metal oxides may include, but are not limited to, at least one of lithium cobalt oxide (e.g. **LiCoO₂**), lithium nickel oxide (e.g. **LiNiO₂**), lithium manganese oxide (e.g. **LiMnO₂**, **LiMn₂O₄**), lithium nickel cobalt oxide, lithium manganese cobalt oxide, lithium nickel manganese oxide, lithium nickel cobalt manganese oxide (e.g. **LiNi_{1/3}Co_{1/3}Mn_{1/3}O₂** (also abbreviated as **NCM333**), **LiNi_{0.5}Co_{0.2}Mn_{0.3}O₂** (also abbreviated as **NCM523**), **LiNi_{0.5}Co_{0.25}Mn_{0.25}O₂** (also abbreviated as **NCM211**), **LiNi_{0.6}Co_{0.2}Mn_{0.2}O₂** (also abbreviated as **NCM622**), **LiNi_{0.8}Co_{0.1}Mn_{0.1}O₂** (also abbreviated as **NCM811**)), lithium nickel cobalt aluminum oxide (e.g. **LiNi_{0.85}Co_{0.15}Al_{0.05}O₂**), and modified compounds thereof, etc. Examples of the lithium-containing phosphate with olivine structure may include, but are not limited to, at least one of lithium iron phosphate (such as **LiFePO₄** (also abbreviated as **LFP**)), lithium iron phosphate-carbon composite, lithium manganese phosphate (such as **LiMnPO₄**), lithium manganese phosphate-carbon composite, lithium manganese iron phosphate, and lithium manganese iron phosphate-carbon composite.

The negative electrode plate include a negative electrode current collector and a negative electrode active substance layer. A negative tab is connected to or formed on the negative electrode current collector. Taking a lithium-ion battery as an example, a material for the negative electrode current collector may be copper, and the negative electrode active substance may include at least one of the following materials: a carbon-containing material, a silicon material, and lithium and lithium alloy material, where the carbon-containing material may include natural graphite, artificial graphite, mesocarbon microbead, hard carbon, soft carbon etc., the silicon material may include silicon monoxide, silicon nanowire, composite silicon-carbon material, etc.; the lithium and lithium alloy material may include at least one of titanium oxide, lithium, lithium alloy, and a material capable of forming lithium alloy.

The electrically conductive agent forming an electrode slurry may include at least one of superconducting carbon, acetylene black, carbon black, Ketjen black, carbon dots, carbon nanotube, graphene, and carbon nanofiber.

A positive electrode binder may include at least one of polyvinylidene fluoride **(PVDF),** polytetrafluoroethylene **(PTFE),** vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin, or a fluorine-free positive electrode binder.

A negative electrode binder may include one of acrylonitrile, acrylic acid, and polyamide, or is one of acrylonitrile-acrylic acid, acrylonitrile-polyamide, and acrylic acid-polyamide copolymer, or is acrylonitrile-acrylic acid-polyamide copolymer.

The battery cell is applicable to various types of batteries. A battery may be used to power electrical devices, such as a vehicle, e.g., providing the vehicle with power for manipulation or power for driving. The battery may include a housing and a battery module, the housing is used to provide an accommodating space for the battery module, and the battery module is mounted within the housing. The housing may be made of a metal. The battery module may include a plurality of battery cells connected in series or in parallel or in parallel-series connection. The battery cell is a smallest unit constituting the battery. The battery cell may include an electrode assembly which can incur an electrochemical reaction.

The battery is applicable to various types of electrical devices that use a battery. The electrical device may be a mobile phone, a portable device, a laptop, an electric bike, an electric vehicle, a ship, a spacecraft, an electronic toy, an electric tool, etc. For example, the spacecraft includes an airplane, a rocket, a space shuttle, a spaceship and the like; the electronic toy includes a fixed or mobile electric toy, such as a game console, a toy electric vehicle, a toy electric ship, a toy electric aircraft and the like; and the electric tool includes a metal-cutting power tool, a grinding power tool, an assembly power tool and a railway power tool, such as an electric drill, an electric grinder, an electric wrench, an electric screwdriver, an electric hammer, an electric impact drill, a concrete vibrator, and an electric planer. The electrical device above is not particularly limited in the embodiments of the present disclosure.

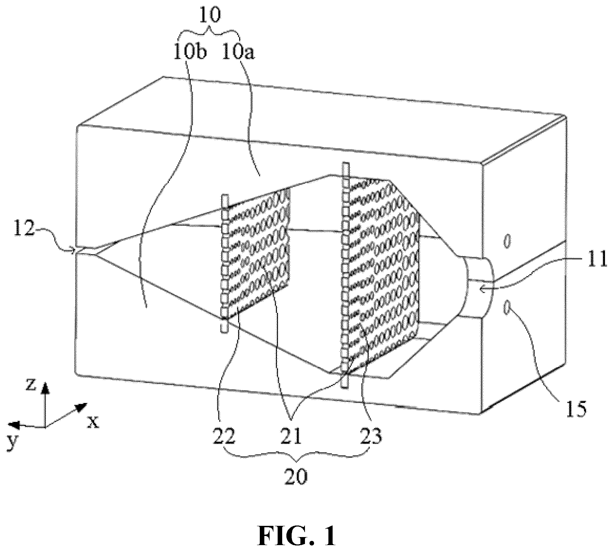

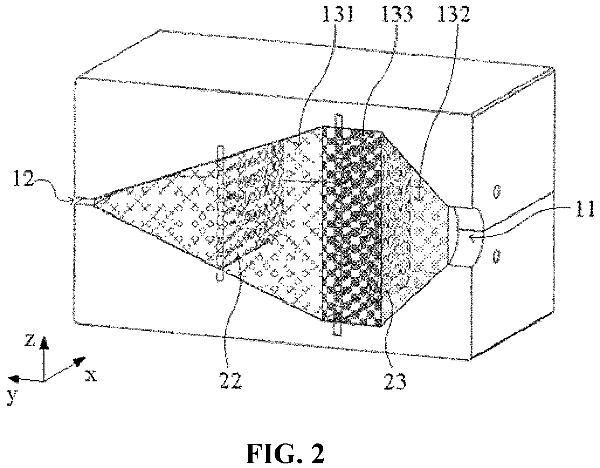

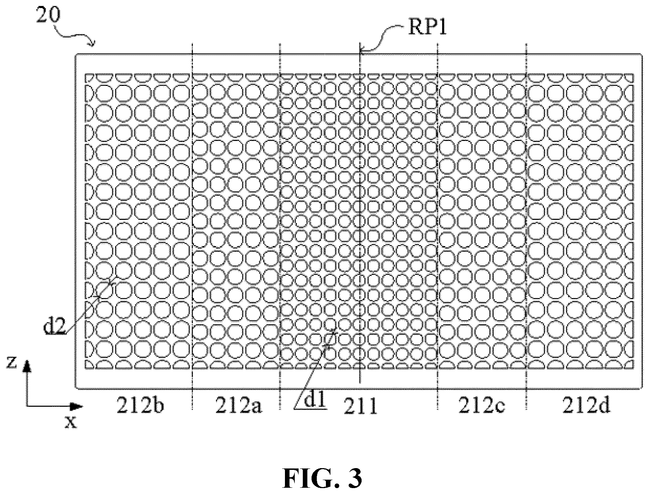

FIG. **1** is a mounting structural schematic of some embodiments of an extrusion coating apparatus according to the present disclosure when partially cut open. FIG. **2** is a schematic diagram of multiple chambers divided from an inner chamber in FIG. **1****.** FIG. **3** is a structural schematic of a porous structure in some embodiments of an extrusion coating apparatus according to the present disclosure.

Referring to FIGS. **1-3****,** the present disclosure provides an extrusion coating apparatus, including: a housing **10** and a porous structure **20.** The housing **10** has an inner chamber, a housing wall of the housing **10** has a feed port **11** and a coating outlet **12** both communicated with the inner chamber, and the coating outlet **12** is in a slit shape. The porous structure **20** is disposed in the inner chamber and located on a material flow path between the feed port **11** and the coating outlet **12,** so that at least a portion of a material passes through the porous structure **20.**

For a material used for coating, a coating process thereof and results need to meet some specific requirements, and these requirements may be related to many factors of the material and manufactured products, such as flow characteristics of the material itself, a formula system of the material, yield requirements of the manufactured products, shape, strength or ductility of the manufactured products, etc.

In this embodiment, with the porous structure disposed in the inner chamber of the housing, and the porous structure located on the material flow path between the feed port and the coating outlet so that at least a portion of the material entering from the feed port passes through the porous structure under blocking action of the porous structure, adjustment of a speed of the material discharged from the coating outlet is attained, thereby meeting the relevant needs for material coating. The relevant needs for material coating here may include many aspects, such as being suitable for materials with different rheological characteristics, width of a formed diaphragm, speed distribution and consistency of the diaphragm at various areas of a coating outlet, etc.

The coating outlet **12** is in the slit shape, and slit length thereof is much larger than slit width. For example, the slit length is several times or even dozens of times the slit width, such that a material in the inner chamber can spread in a length direction of the coating outlet when extruded out under the action of pressure.

In FIGS. **1-3****,** a first direction **x** is taken as the length direction of the coating outlet **12,** a second direction **y** and a third direction **z** are both perpendicular to the first direction **x,** and the second direction **y** and the third direction z are perpendicular to each other. The second direction y may be a direction from a feed port **11** of the housing **10** to the coating outlet **12,** equivalent to a material flowing direction, and may also be parallel to axial directions of through holes included in the porous structure **20** or parallel to a thickness direction of the porous structure **20** in a plate shape, while the third direction **z** may be used as an outer normal direction of a surface on which the housing **10** is placed, or may be perpendicular to axial directions of the through holes included in the porous structure **20** or perpendicular to the thickness direction of the porous structure 20 in the plate shape.

The porous structure **20** may be implemented in a variety of forms, such as a plate having multiple through holes, a net with multiple meshes, multiple material passages formed by partially covering the inner chamber with baffles, or the like. The multiple through holes, meshes or passages included in the porous structure **20** themselves may have a homogenizing effect on a passing material, and then provide a wider range of material flow rate adjustment through distribution, cross-sectional shape, size, etc. of the multiple through holes, meshes or passages in the porous structure **20.**

Additionally, the porous structure **20** may also provide a pressure-building action on the material. For materials lacking fluidity, smooth coating of the material may be ensured by building pressure, and interface fusion between multiple agglomerated materials may also be improved by pressure building, thereby allowing a diaphragm obtained to be more successive and complete and further obtaining a diaphragm with higher strength and better ductility. The pressure building action of the porous structure on the material can also facilitate uniform distribution of the material in the inner chamber of the housing and improve consistency of extrusion flow rate of the material in the length direction of the coating outlet.

In this embodiment, the material may include an electrode slurry used for positive electrode coating and having a solid content of **75%-85%,** and may also include an electrode slurry used for negative electrode coating and having a solid content of **68%-74%.** Whereas, for the electrode slurry used for positive electrode coating and having the solid content of **75%-85%** or the electrode slurry used for negative electrode coating and having the solid content of **68%-74%,** when the electrode slurry is subjected to coating on a surface of an electrode plate through the extrusion coating apparatus, since this electrode slurry contains a very low amount of solvent and presents no fluidity on a macro scale, viscosity is very high and it is difficult to achieve self-homogenizing distribution in the length direction of the coating outlet. Therefore, there is a problem of uneven extrusion speed when there is no porous structure in the inner chamber of the housing. And, with the porous structure disposed in the inner chamber, at least a portion of the electrode slurry is enabled to pass through the porous structure, thereby increasing evenness level of the extrusion speed of the electrode slurry with the porous structure, meeting the coating requirements of the electrode slurry of a positive electrode plate or negative electrode plate, and improving quality of the positive electrode plate or negative electrode plate formed.

Referring to FIG. **1** and FIG. **3****,** in some embodiments, the porous structure **20** has at least three through holes **21,** the at least three through holes **21** include at least two groups of through holes, and the at least two groups of through holes are differed in at least one of through hole cross-sectional size and porosity. The through hole **21** may be a hole that directly runs through the porous structure **20,** or may be a hole enclosed by a groove on an edge of the porous structure **20** and a chamber wall of the inner chamber of the housing.

In this embodiment, the at least three through holes of the porous structure are grouped to enable the at least two groups of through holes included in the at least three through holes to be differed in at least one of the through hole cross-sectional size and the porosity, so that flow rate adjustment is attained using diversity in the through hole cross-sectional size and/or porosity in dependence on ranges of materials on which different groups of through holes act, and in this way, the relevant needs for material coating may be more fully met.

Referring to FIG. **3****,** in some embodiments, the at least two groups of through holes are arranged along the length direction (i.e., first direction **x**) of the coating outlet **12.** By arranging groups of through holes diverse in through hole cross-sectional size and/or porosity along the length direction of the coating outlet, utilizing the different groups of through holes provides adjustment of flow rate for the material passing through different areas in the length direction of the coating outlet and meets the specific needs for material coating, such as allowing a material to be discharged outward from the coating outlet evenly in the length direction of the coating outlet.

Controlling flow resistance of the material through at least two groups of through holes allow material flow rate at the coating outlet to be effectively adjusted in the length direction of the coating outlet, which, in this way, allows the use of a feed port size smaller than the length of the coating outlet, thus facilitating connection between the matching feed port and a pipeline of material conveying equipment. In FIG. **1****,** the housing **10** may be provided, on a side wall where the feed port **11** is located, with a connection hole **15** for connecting the pipeline of the material conveying equipment.

In FIG. **3****,** at least two groups of through holes include a first group of through holes **211** and a plurality of second groups of through holes. The first group of through holes **211** is distinct from the second groups of through holes in that a region of the porous structure **20** corresponding to the first group of through holes **211** intersects a first plane **RP1,** while the first plane **RP1** is a reference plane passing through a midpoint of the feed port **11** and perpendicular to the length direction of the coating outlet **12.** This reference plane is perpendicular to the first direction x and parallel to the third direction **z.**

The plurality of second groups of through holes may be located on one side or both sides of the first group of through holes **211.** The first group of through holes **211** and the second groups of through holes are differed in at least one of through hole cross-sectional size and porosity. The plurality of second groups of through holes in FIG. **3** include second groups of through holes **212a, 212b, 212c,** and **212d,** where the second groups of through holes **212a** and **212b** are located on the rear side of the first group of through holes **211** in the first direction x, and the second groups of through holes **212c** and **212d** are located on the front side of the first group of through holes **211** in the first direction **x.** In further embodiments, all the second groups of through holes may be disposed on the front side or the rear side of the first group of through holes **211** in the first direction **x.**

Given that in the length direction of the coating outlet, the flow rate of a material facing the feed port is usually higher than that of a material not facing the feed port, therefore, by, depending on the first plane determined by a position of the feed port, allowing the at least two groups of through holes to include a first group of through holes in the corresponding region intersecting the first plane and a plurality of second groups of through holes located on one side or both sides of the first group of through holes, and with the first group of through holes and the second groups of through holes differed in at least one of through hole cross-sectional size and porosity, effective adjustment of the material flow rate in the length direction of the coating outlet is attained and the relevant needs for material coating are met.

For a group of through holes, cross-sectional size of through holes contained in the group of through holes can directly affect unit flow quantity of a material passing through the group of through holes. Generally, the larger the cross-sectional size of the through holes, the greater the unit flow quantity of the material passing through the group of through holes, such that flow rate of the material passing through the group of through holes also increases accordingly. Referring to FIG. **1** and FIG. **3****,** in some embodiments, the through hole cross-sectional size of the first group of through holes **211** is less than that of the second groups of through holes.

By allowing the through hole cross-sectional size of the first group of through holes to be less than that of the second groups of through holes, it is possible to reduce the unit flow quantity of a material passing through the first group of through holes and to increase the unit flow quantity of the material passing through the second group of through holes, and thus, diversity in the flow rate of the material in the length direction of the coating outlet is reduced with control of the unit flow quantity of the material flowing through different groups of through holes, such that the material is discharged more evenly in the length direction of the coating outlet.

For the plurality of second groups of through holes, each second group of through holes may also achieve flow rate adjustment effect through diversity in the through hole cross-sectional size. The flow rate of the material usually gradually decreases in a direction parallel to the length direction of the coating outlet and away from the first plane. Therefore, in some embodiments, the through hole cross-sectional sizes of the second groups of through holes located on one side of the first group of through holes **211** gradually increase in a direction away from the first plane **RP1.** For example, in FIG. **3****,** the through hole cross-sectional size of the second group of through holes **212b** located on the left side of the first group of through holes is larger than that of the second group of through holes **212a,** while the through hole cross-sectional size of the second group of through holes **212d** located on the right side of the first group of through holes is larger than that of the second group of through holes **212c.**

By allowing the through hole cross-sectional size of the plurality of second groups of through holes located on one side of the first group of through holes to gradually increase in this direction, the decrease in material flow rate is compensated for using the increase in the porosity to reduce flow rate diversity of the material in the length direction of the coating outlet, such that the material is discharged outward more evenly in the length direction of the coating outlet.

The through holes may also be in other shapes, such as rectangle, ellipse, rhombus, etc., and its cross-sectional size may be a length of a long or short side of the rectangle, a length of a long or short axis of the ellipse, a side length or diagonal length of the rhombus, or the like.

Referring to FIG. **3****,** the first group of through holes **211** may include a plurality of circular through holes. Given that if the diameter of the through holes in the first group of through holes is too large, adjustment effect on material speed is limited, and that if the diameter of the through holes is too small, discharging continuity of a material is then affected, both material speed adjusting action and discharging continuity for the first group of through holes may, therefore in some embodiments, be taken into account as much as possible by allowing the diameter d1 of the through holes in the first group of through holes **211** to be **1-15 mm**.

Optionally, the diameter **d1** is **2-10 mm.** By allowing the diameter d1 of the through holes in the first group of through holes to be **2-10 mm,** both the material speed adjusting action function and discharging continuity for the first group of through holes may be more effectively taken into account.

Referring to FIG. **3** again, the second group of through holes may include a plurality of circular through holes. In the second groups of through holes and the first group of through holes, too low flow rate of a material passing through the first group of through holes can be caused if the ratio of the through hole diameter of the first group of through holes to that of the second groups of through holes is too large, and it is difficult to effectively achieve even flow rate of the material in the length direction of the coating outlet if this ratio is too small. Therefore, in some embodiments, by allowing ratio **d2/d1** of the diameter **d2** of the through holes in the plurality of second groups of through holes to the diameter **d1** of the through holes in the first group of through holes **211** to be **1.1-10,** it is possible to take into account as much as possible both the even flow rate of the material in the length direction of the coating outlet and the flow rate of the material passing through the first group of through holes.

Optionally, the ratio **d2/d1** is **1.5-6.** By allowing the ratio **d2/d1** of the diameter **d2** of the through holes in the plurality of second groups of through holes to the diameter **d1** of the through holes in the first group of through holes to be **1.5-6,** it is possible to more effectively take into account both the even flow rate of the material in the length direction of the coating outlet and the flow rate of the material passing through the first group of through holes.

For the control of material flow rate, the porosity of the groups of through holes may be utilized in addition to the through hole cross-sectional size. The porosity of a group of through holes refers to a ratio of a sum of cross-sectional areas of all through-holes in the group of through holes to area of a region of the porous structure where the group of through holes is located. In some embodiments, the porosity of the first group of through holes **211** is less than that of the second groups of through holes.

By allowing the porosity of the first group of through holes to be less than that of the second groups of through holes, it is possible to reduce unit flow quantity of a material passing through the first group of through holes and to increase unit flow quantity of the material passing through the second group of through holes, and thus, diversity in the flow rate of the material in the length direction of the coating outlet is reduced with control of the unit flow quantity of the material flowing through different groups of through holes, such that the material is discharged outward more evenly in the length direction of the coating outlet.

For the plurality of second groups of through holes, each second group of through holes may also achieve flow rate adjustment effect through diversity in the porosity. The flow rate of the material usually gradually decreases in a direction parallel to the length direction of the coating outlet and away from the first plane. Therefore, in some embodiments, the porosity of the second groups of through holes located on one side of the first group of through holes **211** gradually increases in a direction away from the first plane, the decrease in material flow rate is, therefore, compensated for using the increase in the porosity, and flow rate diversity of the material in the length direction of the coating outlet is reduced, such that the material is discharged outward more evenly in the length direction of the coating outlet.

For the porous structure, if the cross-sectional area of the at least three through holes takes up a too small part of the overall area of the porous structure, material extrusion resistance is then large, reducing overall extrusion speed of the material, and making it difficult to meet requirements of subsequent production processes; further, pressure withstood by the inner chamber of the housing will also increase sharply due to the large resistance, thus easily resulting in damage. If the cross-sectional area of the at least three through holes takes up a too large part of the overall area of the porous structure, there is not enough pressure built in the inner chamber of the housing for the material, resulting in uneven pressure for the material in the inner chamber, more easily causing uneven extrusion speed to the coating outlet, and affecting interface fusion for the material. Therefore, in some embodiments, by allowing the ratio **s1/s2** of the sum **s1** of the cross-sectional areas of the at least three through holes to the overall area **s2** of the porous structure to be **20%-60%,** it is possible to take into account as much as possible both reduction in material extrusion resistance and a need of the material for building pressure in the inner chamber of the housing.

Optionally, the ratio **s1/s2** is **30%-55%.** By allowing the ratio **s1/s2** of the sum **s1** of cross-sectional areas of the at least three through holes to the overall area **s2** of the porous structure to be **30%-55%,** it is possible to take into account more effectively both reduction in the material extrusion resistance and the need of the material for building pressure in the inner chamber of the housing.

In FIG. **1** and FIG. **3****,** the feed port **11** may directly face a midpoint of the coating outlet **12.** Correspondingly, the first group of through holes **211** may be located in the middle of the porous structure **20** as a middle group of through holes, while the plurality of second groups of through holes may be located on the left and right sides of the first group of through holes **211** as side groups of through holes. It can be seen from the figures that cross-sectional size of the through holes in the center first group of through holes **211** is smaller, for example, diameter of the circular through holes is smaller.

In order to enable material flow rate on both sides of the first plane to be more even, referring to FIG. **3****,** in some embodiments, the number of the plurality of second groups of through holes is an even number, and the plurality of second groups of through holes are symmetrical with respect to the first plane **RP1.** In this way, the material may be discharged outward at a more even flow rate in the length direction of the coating outlet by enabling an even number of second groups of through holes to be symmetrical with respect to the first plane.

In FIG. **3****,** one or more second groups of through holes may be provided on the left side of the first group of through holes **211,** such as second groups of through holes **212a** and **212b.** The through hole cross-sectional size of the second groups of through holes **212a** and **212b** are both larger than that in the first group of through holes **211,** for example, the diameter of the circular through holes is larger. For the second groups of through holes **212a** and **212b,** the through hole cross-sectional size of the second group of through holes **212b** that is further away from the first group of through-holes is larger than that of the second group of through holes **212a.** The second groups of through holes **212c** and **212d** on the right side of the first group of through holes **211** may be symmetrical with the second groups of through holes **212a** and **212b** on the left side with respect to the first plane **RP1.**

Referring to FIG. **2****,** in some embodiments, the inner chamber includes: a feeding chamber **132,** a discharging chamber **131,** and an intermediate chamber **133,** where the feeding chamber **132** is communicated with the feed port **11,** the discharging chamber **131** is communicated with the coating outlet **12,** the intermediate chamber **133** is located between the feeding chamber **132** and the discharging chamber **131,** and connects the feeding chamber **132** and the discharging chamber **131;** and the porous structure **20** is located in at least one of the feeding chamber **132,** the discharging chamber **131,** and the intermediate chamber **133.**

In order to conveniently identify the various chambers divided in the inner chamber, positions of the feeding chamber, the discharging chamber **131** and the intermediate chamber **133** are identified in FIG. **2** by different filling patterns. The inner chamber is divided into multiple chambers including the feeding chamber, the discharging chamber, and the intermediate chamber, and in this way, by disposing the porous structure in at least one of the feeding chamber, the discharging chamber, and the intermediate chamber, it is possible to perform configuring according to roles of the porous structure in the different chambers so as to achieve the relevant processing requirements when a material passes through the extrusion coating apparatus.

In FIG. **2****,** the cross-sectional area of the feeding chamber **132** may gradually increase in the material flowing direction, and in this way, the feeding chamber may be communicated with the feed port through the small cross-sectional area to facilitate butt connection between the feed port and a feed pipe, and material capacity that may be accommodated inside the extrusion coating apparatus is increased through the gradually increased cross-sectional area. The cross-sectional area of the discharging chamber **131** gradually decreases.

The cross-sectional area of the discharging chamber **131** may gradually decreases in the material flowing direction, which, in this way, helps to build material pressure within the discharging chamber so that the material is allowed to flow to the coating outlet more smoothly.

Referring to FIG. **1** and FIG. **2****,** in some embodiments, the porous structure **20** includes at least one first porous plate **22,** and the at least one first porous plate **22** is disposed in the discharging chamber **131** and arranged at intervals along the material moving direction.

By disposing the first porous plate in the discharging chamber, adjusting action for material flow rate may be achieved via through hole arrangement on the first porous plate when a material flows through the discharging chamber to the coating outlet, such that the flow rate of the material at various positions of the coating outlet can be adjusted before being discharged from the coating outlet, thus meeting the relevant needs for material coating. As long as meeting certain strength and rigidity requirements and having a certain anti-extrusion capacity, a material for the first porous plate is not limited. In this way, the first porous plate may be prevented from being destroyed by a material with greater pressure.

In FIG. **1** and FIG. **2****,** the porous structure **20** further includes at least one second porous plate **23,** and the at least one second porous plate **23** is disposed in the intermediate chamber **133** and arranged at intervals along the material moving direction. With the second porous plate disposed in the intermediate chamber, the second porous plate may be utilized to build up pressure on a material flowing through the intermediate chamber, so that the material can flow to the coating outlet more smoothly, and with through holes in the second porous plate, it is possible to achieve pre-homogenization of the material before entering the discharging chamber and increase homogenization level of the material in the discharging chamber, thereby assisting the first porous plate in the discharging chamber in flow rate adjustment for the material.

Referring to the first porous plate, as long as meeting certain strength and rigidity requirements and having a certain anti-extrusion capacity, a material for the second porous plate is not limited. In this way, the second porous plate may be prevented from being destroyed by a material with greater pressure.

In the above embodiment, by combinational optimization of the number and arrangement manner of the groups of through holes in the porous structure **20,** the size and distribution of the through holes, the number and positions provided in the housing and other factors, variations in characteristics of materials in a production site, yield and other demands may be satisfied as much as possible. Moreover, the porous structure **20** within the housing **10** may also be replaced, added or deleted as required. In this way, the different material requirements are met via the simple and flexible structural form, making it more convenient to use.

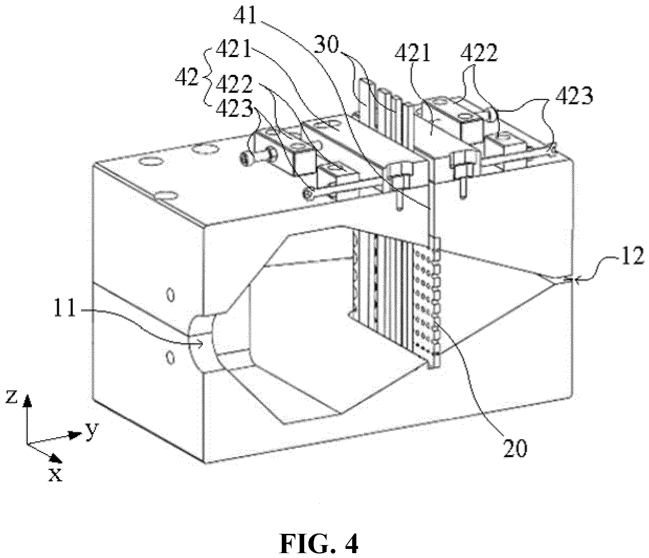

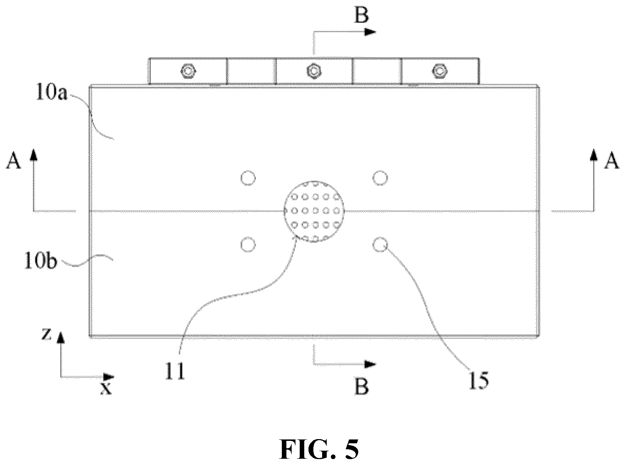

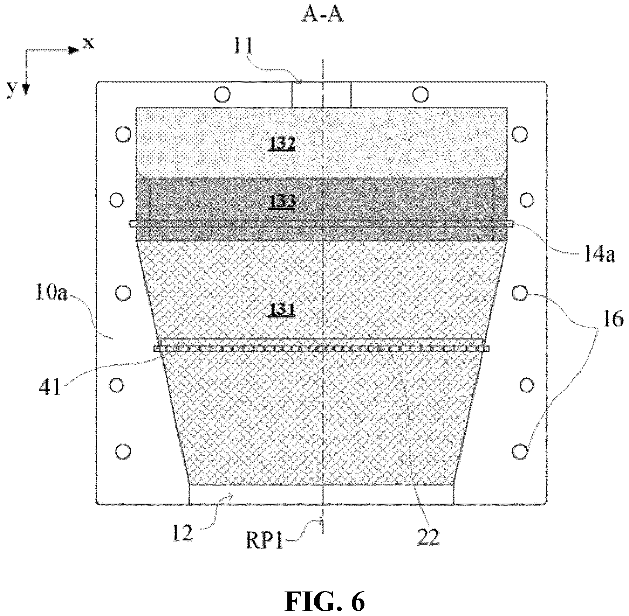

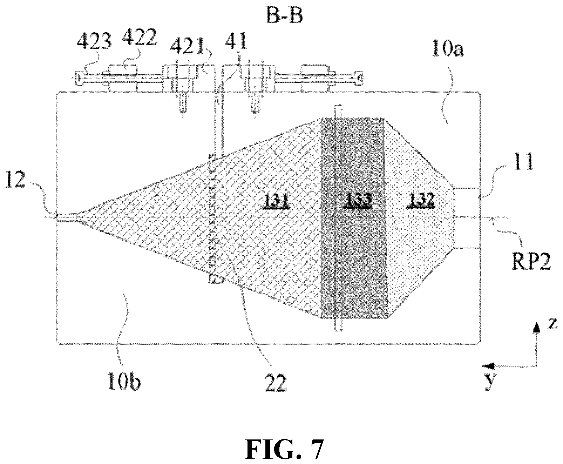

FIG. **4** is a mounting structural schematic of further embodiments of an extrusion coating apparatus according to the present disclosure when partially cut open. FIG. **5** is a front view of FIG. **4** in a material moving direction. FIG. **6** is a structural schematic diagram of an AA section in FIG. **5****.** FIG. **7** is a structural schematic diagram of an **BB** section in FIG. **5****.**

Referring to FIG. **7****,** cross-sectional size of the feeding chamber **132** in the third direction **z** may gradually increase in the material flowing direction, so that the cross-sectional area also gradually increases correspondingly. Referring to FIG. **6** and FIG. **7****,** cross-sectional sizes of the discharging chamber **131** in the second direction **y** and the third direction **z** may both gradually decrease in the material flowing direction, so that the cross-sectional area also gradually decreases correspondingly.

In order to conveniently identify the various chambers divided in the inner chamber, positions of the feeding chamber **132,** the discharging chamber **131** and the intermediate chamber **133** are also identified in FIG. **6** and FIG. **7** by different filling patterns. It can be seen that the first porous plate **22** is disposed in the discharging chamber **131,** while the porous structure **20** may not be disposed in the intermediate chamber **133** and the feeding chamber **132.**

In order for improving an ability of the porous structure **20** to regulate material flow rate and facilitating use, with reference to FIGS. **4-7****,** in some embodiments, the extrusion coating apparatus further includes: a covering member **30** and an adjustment mechanism **40.** A position of the covering member **30** relative to the porous structure **20** is adjustable. The adjustment mechanism **40** is connected to the covering member **30** and configured to adjust a covering range of the covering member **30** for the at least three through holes **21.**

The covering member with the adjustable position is employed to adjust the covering range for the at least three through holes in the porous structure. Material flow quantity variation at different positions is achieved through different covering ranges to achieve more flexible material flow rate adjustment, thereby further meeting the related needs for material coating.

In cases where multiple porous structures **20** are provided within the housing **10,** the covering member **30** may be provided near at least one of the multiple porous structures **20.** The covering member **30** may be in a long bar shape or other shapes. The number of the covering members **30** may be one or more. The covering member **39** may be located on a side of the porous structure **20** adjacent to the coating outlet **12** or on a side away from the coating outlet **12.**

Referring to FIG. **4****,** in some embodiments, the covering member **30** is slidable on a surface of the porous structure **20** away from the coating outlet 12. With the covering member disposed on a side of the porous structure away from the coating outlet and allowed to be slidable on the surface of this side, on the one hand, through holes in the porous structure may be better covered, and on the other hand, supporting action may be created for the covering member through the porous structure, improving smoothness during position adjustment of the covering member and improving stability of the covering action attained by the covering member.

The position of the covering member **30** may be adjusted through various forms of adjustment mechanisms **40,** including mechanical means or means based on electricity, magnetism, etc. In FIG. **4****,** the adjustment mechanism **40** includes: an adjustment channel **41** and a locking portion **42.** The adjustment channel **41** penetrates from an outer wall of the housing **10** to the inner chamber. The locking portion **42** is disposed outside the housing **10** and connected to the covering member **30.** The covering member **30** is inserted into the adjustment channel **41** and is slidable within the adjustment channel **41** along the length direction of the coating outlet **12,** and the locking portion **42** is configured to lock the covering member **30** at a set position within the adjustment channel **41.**

The adjustment channel **41** may be provided adjacent to a mounting area of the porous structure **20** so that the covering member **30** inserted into the adjustment channel **41** can be close to a surface of the porous structure **20** to achieve a better covering effect. In order to stably maintain the position of the covering member **30** after adjusting the covering member **30,** with reference to FIG. **4** and FIG. **7****,** in some embodiments, the locking portion **42** includes: a pressing block **421,** a fixed block **422,** and an adjusting bolt **423.** The pressing block **421** is slidably disposed on a surface of the outer wall of the housing **10** and configured to lock the position of the covering member **30** relative to the housing **10** by pressing the covering member **30.** The fixed block **422** is disposed on the outer wall of the housing **10.** The adjusting bolt **423** is in threaded connection with the fixed block **422** and abuts against the pressing block **421.**

In order to facilitate use of the covering member, the through adjustment channel is provided on the outer wall of the housing so that the covering member is inserted into the adjustment channel and slides in the adjustment channel to achieve the use and position adjustment of the covering member. Through locking action of the locking portion for the covering member, it is possible to allow covering action of the covering member for some of through holes in the porous structure to be more stable and reliable.

In FIG. **4** and FIG. **7****,** the fixed block **422** remains fixed relative to the outer wall of the housing **10,** and is pressed against the pressing block **421** by turning a screw head of the adjusting bolt **423** so as to achieve the retaining action on the covering member **30** through pressing block **421** pressing the covering member **30.** In order to prevent the pressing block **421** from detaching from the outer wall of the housing **10,** the pressing block **421** may be constrained by an elongated hole provided in the pressing block **421** in cooperation with a bolt passing through the elongated hole to connect to the housing **10,** so that movement of the pressing block **421** on the surface of the outer wall of the housing **10** is guided through sliding fit between the bolt and the elongated hole.

Referring to FIG. **7****,** in some embodiments, the coating outlet **12** is symmetrically disposed with respect to a second plane **RP2,** and the second plane **RP2** passes through a middle position of the coating outlet **12** in a width direction and intersects the feed port **11.** In this way, the feed port may be allowed to right face the coating outlet **12** in the material moving direction, and the coating outlet **12** allowed to be disposed symmetrical with respect to the second plane **RP2,** so that it is possible to enable material flow rate for the coating outlet **12** in the width direction of the coating outlet **12** to be more even.

In some embodiments, axial extension directions of multiple through holes of the porous structure **20** are parallel to the second plane **RP2** so that a material can be more smoothly extruded out from the coating outlet **12** after passing through the porous mechanism **20.** For the first porous plate **22** or the second porous plate **23** included in the porous structure **20,** the thickness direction of each which may be parallel to the second plane **RP2.**

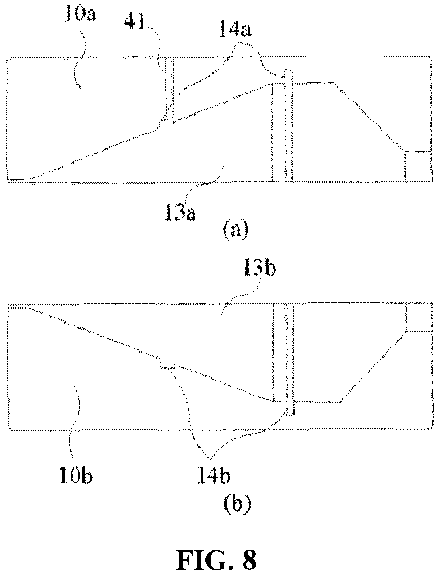

**(a)** and **(b)** of FIG. **8** are respectively structural schematic diagrams of two sub-housings in FIG. **7** that make up the housing.

The housing may be made in an integral form, or may be obtained by making sub-housings and then assembling them. Referring to FIG. **8****,** in some embodiments, the housing **10** includes the first sub-housing **10a** and the second sub-housing **10b.** The first sub-housing **10a** has a first groove **13a,** and a first mounting portion **14a** for mounting the porous structure **20** is provided within the first groove **13a.** The second sub-housing **10b** has a second groove **13b,** and a second mounting portion **14b** for mounting the porous structure **20** is provided within the second groove **13b.** At least one of the first mounting portion **14a** and the second mounting portion **14b** may be implemented using clamping slots located in inner surfaces of the grooves as shown in **(a)** and **(b)** of FIG. **8****,** or may be in other structural forms, such as protrusion structure, etc.

The housing **10** may be configured such that after the first sub-housing **10a** and the second sub-housing **10b** are fitted together, the first groove **13a** and the second groove **13b** enclose the inner chamber. The housing is formed in a structural form of the sub-housings, the inner chamber of the housing is enclosed by the grooves within the sub-housings, and the porous structure is mounted and fixed through the mounting portions within the grooves, thereby effectively reducing difficulty in manufacturing the housing and facilitating mounting, replacement and detachment of the porous structure in the inner chamber.

Referring to FIG. **7** and FIG. **8****,** in some embodiments, at least one of the feed port **11** and the coating outlet **12** is enclosed by the first sub-housing **10a** and the second sub-housing **10b** fitted together. With edge portions of the sub-housings to enclose the feed port and the coating outlet, formation of the feed port and the coating outlet is enabled to be simpler, thereby further reducing the difficulty in manufacturing the housing.

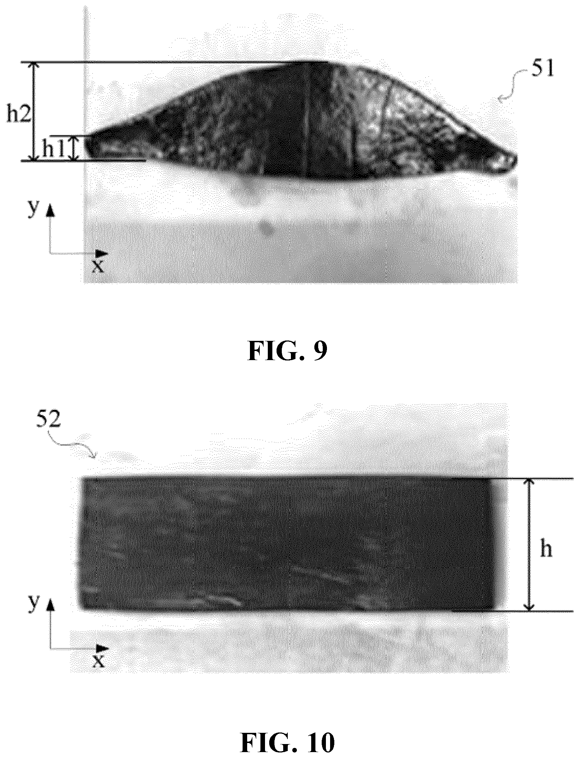

Additionally, referring to FIG. **5** and **(a)** of FIG. **8****,** a plurality of connection holes **16** may be provided in butting end faces of the first sub-housing **10a** adjacent to the second sub-housing **10b** for fixed connection of the first sub-housing **10a** and the second sub-housing **10b** after being fitted together FIG. **9** is an actual state diagram when an electrode slurry is extruded from a coating outlet of an extrusion die head in related art. FIG. **10** is an actual state diagram when an electrode slurry is extruded from a coating outlet of an embodiment of an extrusion coating apparatus of the present disclosure.

In order to more intuitively understand the effect of an electrode slurry prepared by the quasi-dry method when an embodiment of the extrusion coating apparatus of the present disclosure is adopted, reference may be made to a comparison between FIG. **9** and FIG. **10****.** In FIG. **9****,** it can be seen that in the second direction **y** (i.e., the material moving direction), widths of two ends of a diaphragm **51** in the first direction **x** (i.e., the length direction of the coating outlet) extruded out via the coating outlet of an extrusion die head in the related art is **h1**, width of a middle portion of the diaphragm **51** is **h2,** and h 1 is smaller than **h2,** thus presenting a less regular diaphragm. This is a result of material flow rate in the middle of the coating outlet being higher than that at both ends.

In FIG. **10****,** it can be seen that in the second direction **y** (i.e., the material moving direction), widths of two ends of the diaphragm **52** in the first direction **x** (i.e., the length direction of the coating outlet) extruded out via the coating outlet of an embodiment of the extrusion coating apparatus in the present disclosure and width of the middle of the diaphragm **52** are both **h,** thus presenting a regular and flat diaphragm. This is a result of flow rate at the coating outlet in the length direction being even.

The above-mentioned extrusion coating apparatus of the present disclosure may be used for coating of an electrode slurry onto a surface of a current collector in an electrode plate, and may also be used in other scenarios that require coating materials, such as manufacturing rubber and plastic plates of various thicknesses and widths. Therefore, the present disclosure further provides an electrode plate coating machine, including an extrusion coating apparatus according to any one of the foregoing embodiments. The electrode plate coating machine employing a foregoing extrusion coating apparatus can improve an electrode plate coating process, improving electrode plate quality.

The present disclosure further provides a battery production system, including an electrode plate coating machine according to any one of the foregoing embodiments. The battery production system employing the foregoing electrode plate coating machine can improve a battery production process, improving battery quality.

Although the present disclosure has been described with reference to the preferred embodiments, various improvements may be made thereto and components thereof may be replaced with equivalents without departing from the scope of the present disclosure. In particular, the technical features mentioned in the various embodiments may be combined in any manner as long as there is no structural conflict. The present disclosure is not limited to the particular embodiments disclosed herein, and includes all technical solutions falling within the scope of the claims.

## Claims

1. An extrusion coating apparatus, comprising:
a housing **(10)** having an inner chamber, a housing wall of the housing **(10)** having a feed port **(11)** and a coating outlet **(12)** both communicated with the inner chamber, the coating outlet **(12)** being in a slit shape;and
a porous structure **(20)** disposed in the inner chamber and located on a material flow path between the feed port **(11)** and the coating outlet **(12),** so that at least a portion of a material passes through the porous structure **(20).**

2. The extrusion coating apparatus according to claim **1,** wherein the porous structure **(20)** has at least three through holes **(21),** the at least three through holes **(21)** comprise at least two groups of through holes, and the at least two groups of through holes are differed in at least one of through hole cross-sectional size and porosity.

3. The extrusion coating apparatus according to claim **2,** wherein the at least two groups of through holes are arranged along a length direction of the coating outlet **(12).**

4. The extrusion coating apparatus according to claim **2** or **3,** wherein the at least two groups of through holes include a first group of through holes **(211)** and a plurality of second groups of through holes (**212a; 212b; 212c;** and **212d**), wherein a region of the porous structure **(20)** corresponding to the first group of through holes **(211)** intersects a first plane **(RP1),** the plurality of second groups of through holes **(212a; 212b; 212c**; and **212d**) are located on one or both sides of the first group of through holes **(211),** the first group of through holes **(211)** and the second groups of through holes (**212a; 212b; 212c;** and **212d**) are differed in at least one of the through hole cross-sectional size and the porosity, and the first plane **(RP1)** is a reference plane passing through a midpoint of the feed port **(11)** and perpendicular to the length direction of the coating outlet **(12).**

5. The extrusion coating apparatus according to claim **4,** wherein the porosity of the first group of through holes **(211)** is less than that of the second groups of through holes (**212a; 212b; 212c;** and **212d**).

6. The extrusion coating apparatus according to claim **4** or **5,** wherein the porosity of the second groups of through holes (**212a; 212b; 212c;** and **212d**) located on one side of the first group of through holes **(211)** gradually increases in a direction away from the first plane **(RP1).**

7. The extrusion coating apparatus according to claim **4,** wherein the through hole cross-sectional size of the first group of through holes **(211)** is less than that of the second groups of through holes (**212a; 212b; 212c;** and **212d**).

8. The extrusion coating apparatus according to claim **4** or **7,** wherein the through hole cross-sectional sizes of the second groups of through holes (**212a; 212b; 212c;** and **212d**) located on one side of the first group of through holes **(211)** gradually increase in a direction away from the first plane **(RP1).**

9. The extrusion coating apparatus according to any one of claims **4-8,** wherein the number of the plurality of second groups of through holes (**212a; 212b; 212c;** and **212d**) is an even number, and the plurality of second groups of through holes (**212a; 212b; 212c;** and **212d**) are symmetrical with respect to the first plane **(RP1).**

10. The extrusion coating apparatus according to any one of claims **1-9,** wherein the inner chamber comprises: a feeding chamber **(132),** a discharging chamber **(131),** and an intermediate chamber **(133),** wherein the feeding chamber **(132)** is communicated with the feed port **(11),** the discharging chamber **(131)** is communicated with the coating outlet **(12),** the intermediate chamber **(133)** is located between the feeding chamber **(132)** and the discharging chamber **(131),** and connects the feeding chamber **(132)** and the discharging chamber **(131);** and the porous structure **(20)** is located in at least one of the feeding chamber **(132),** the discharging chamber **(131),** and the intermediate chamber **(133).**

11. The extrusion coating apparatus according to claim **10,** wherein cross-sectional area of the feeding chamber **(132)** gradually increases in a material flowing direction; and/or cross-sectional area of the discharging chamber **(131)** gradually decreases in the material flowing direction.

12. The extrusion coating apparatus according to claim **10** or **11,** wherein the porous structure **(20)** comprises at least one first porous plate **(22),** and the at least one first porous plate **(22)** is disposed in the discharging chamber **(131)** and arranged at intervals along the material moving direction.

13. The extrusion coating apparatus according to claim **12,** wherein the porous structure **(20)** further comprises at least one second porous plate **(23),** and the at least one second porous plate **(23)** is disposed in the intermediate chamber **(133)** and arranged at intervals along the material moving direction.

14. The extrusion coating apparatus according to any one of claims **2-9,** further comprising:
a covering member **(30)** whose position relative to the porous structure **(20)** is adjustable; and
an adjustment mechanism **(40)** connected to the covering member **(30)** and configured to adjust a covering range of the covering member **(30)** for the at least three through holes **(21).**

15. The extrusion coating apparatus according to claim **14,** wherein the covering member **(30)** is slidable on a surface of the porous structure **(20)** away from the coating outlet **(12).**

16. The extrusion coating apparatus according to claim **14** or **15,** wherein the adjustment mechanism **(40)** comprises:
an adjustment channel **(41)** penetrating from an outer wall of the housing **(10)** to the inner chamber; and
a locking portion **(42)** disposed outside the housing **(10)** and connected to the covering member **(30),**
wherein the covering member **(30)** is inserted into the adjustment channel **(41)** and is slidable within the adjustment channel **(41)** along the length direction of the coating outlet **(12),** and the locking portion **(42)** is configured to lock the covering member **(30)** at a set position within the adjustment channel **(41).**

17. The extrusion coating apparatus according to claim **16,** wherein the locking portion **(42)** comprises:
a pressing block **(421)** slidably disposed on a surface of the outer wall of the housing **(10)** and configured to lock a position of the covering member **(30)** relative to the housing **(10)** by pressing the covering member **(30);**
a fixed block **(422)** disposed on the outer wall of the housing **(10);** and
an adjusting bolt **(423)** in threaded connection with the fixed block **(422)** and abutting against the pressing block **(421).**

18. The extrusion coating apparatus according to any one of claims **4-9,** wherein diameter **d1** of through holes in the first group of through holes **(211)** is **1-15 mm.**

19. The extrusion coating apparatus according to claim **18,** wherein the diameter **d1** is **2-10 mm.**

20. The extrusion coating apparatus according to any one of claims **4-9,** wherein the ratio **d2/d1** of diameter **d2** of through holes in the plurality of second groups of through holes (**212a; 212b; 212c;** and **212d**) to diameter **d1** of through holes in the first group of through holes **(211)** is **1.1-10.**

21. The extrusion coating apparatus according to claim **20,** wherein the ratio **d2/d1** is **1.5-6.**

22. The extrusion coating apparatus according to any one of claims **2-9,** wherein the ratio **s1/s2** of sum **s1** of cross-sectional areas of the at least three through holes **(21)** to overall area **s2** of the porous structure **(20)** is **20%-60%.**

23. The extrusion coating apparatus according to claim **22,** wherein the ratio **s1/s2** is **30%-55%.**

24. The extrusion coating apparatus according to any one of claims **1-23,** wherein the coating outlet **(12)** is symmetrically disposed with respect to a second plane **(RP2),** and the second plane **(RP2)** passes through a middle position of the coating outlet **(12)** in a width direction and intersects the feed port **(11).**

25. The extrusion coating apparatus according to any one of claims **1-24,** wherein the housing **(10)** comprises:
a first sub-housing **(10a)** having a first groove **(13a),** a first mounting portion **(14a)** for mounting the porous structure **(20)** being provided within the first groove **(13a);** and
a second sub-housing **(10b)** having a second groove **(13b),** a second mounting portion **(14b)** for mounting the porous structure **(20)** being provided within the second groove **(13b),**
wherein the housing **(10)** is configured such that after the first sub-housing **(10a)** and the second sub-housing **(10b)** are fitted together, the first groove **(13a)** and the second groove **(13b)** enclose the inner chamber.

26. The extrusion coating apparatus according to claim **25,** wherein at least one of the feed port **(11)** and the coating outlet **(12)** is enclosed by the first sub-housing **(10a)** and the second sub-housing **(10b)** fitted together.

27. The extrusion coating apparatus according to any one of claims **1-26,** wherein the material comprises an electrode slurry used for positive electrode coating and having a solid content of **75%-85%.**

28. The extrusion coating apparatus according to any one of claims **1-26,** wherein the material comprises an electrode slurry used for negative electrode coating and having a solid content of **68%-74%.**

29. An electrode plate coating machine, comprising:
the extrusion coating apparatus according to any one of claims **1-28.**

30. A battery production system, comprising:
the electrode plate coating machine according to claim **29.**
